# EUROPEAN PATENT SPECIFICATION

(11) **EP 2 892 149 B1**
(45) Date of publication and mention of the grant of the patent: **16.12.2020**
(21) Application number: 12883614.5
(22) Date of filing: 29.08.2012
(51) Int. Cl.: H02P 27/06, H02P 9/08, H02P 27/16, H02P 1/46

(54) **THYRISTOR ACTIVATION DEVICE**
VORRICHTUNG ZUR THYRISTORAKTIVIERUNG
DISPOSITIF D'ACTIVATION DE THYRISTOR

(43) Date of publication of application: 08.07.2015
(73) Proprietor: Toshiba Mitsubishi-Electric Industrial Systems Corporation, Tokyo 104-0031 (JP)
(72) Inventor: OGINO, Hiroshi, Tokyo 104-0031 (JP); ANDO, Akinobu, Tokyo 104-0031 (JP); HOSOKAWA, Yasuhiko, Tokyo 104-0031 (JP); MATSUMOTO, Yasuaki, Tokyo 104-0031 (JP)
(74) Representative: Piotrowicz, Pawel Jan Andrzej
(86) International application number: PCT/JP2012/071792
(87) International publication number: WO 2014/033849

(56) References cited:
- EP-A1- 2 472 713
- EP-A2- 0 160 310
- EP-A2- 0 361 833
- DE-A1- 2 856 538
- JP-A- H09 322 599
- JP-A- S51 129 614
- JP-A- 2003 033 070
- JP-A- 2003 061 380
- JP-A- 2012 135 067

## Description

### TECHNICAL FIELD

This invention relates to a thyristor starter, and particularly to a thyristor starter starting a synchronous machine.

### BACKGROUND ART

A thyristor starter includes a converter converting three-phase AC power to DC power, a DC reactor smoothing DC power, and an inverter converting DC power provided from the converter through the DC reactor to three-phase AC power at a desired frequency and providing the three-phase AC power to a synchronous machine. By controlling three-phase AC power provided to the synchronous machine, the synchronous machine which has been stopped can be started and rotationally driven at a prescribed rotation speed.

A method of controlling an inverter includes a first method of setting a phase control angle to a constant value and a second method of increasing a phase control angle from a minimum value to a maximum value at a constant rate of increase in accordance with a rotation speed of a synchronous machine (see, for example, Japanese Patent Laying-Open No. 2003-61380 (PTD 1)).

DE 28 56 538 A1 (PTD 2) discloses a control device for a thyristor motor by which the advance angle is switched at a predetermined slow rate of change in order to avoid an abrupt change in the motor torque.

### CITATION LIST

### PATENT DOCUMENT

PTD 1: Japanese Patent Laying-Open No. 2003-61380
PTD 2: DE 28 56 538 A1

### SUMMARY OF INVENTION

### TECHNICAL PROBLEM

With the conventional first method, however, with increase in rotation speed of the synchronous machine, a DC voltage which appears on a side of an input terminal of the inverter disadvantageously increases. Since the converter should supply a DC voltage higher than a DC voltage which appears on the side of the input terminal of the inverter, the first method requires a large converter.

With the conventional second method, when a rotation speed of the synchronous machine attains to a certain value, a DC voltage which appears on the side of the input terminal of the inverter attains to a peak value. In this case, a converter having a capacity allowing supply of DC power at the time when the DC voltage attains to the peak value should be mounted and output of the converter should be lowered during a period in which a DC voltage does not attain to the peak value, which results in lowering in efficiency in use of the converter.

Therefore, a primary object of this invention is to provide a thyristor starter capable of achieving reduction in size and improvement in efficiency in use of a converter.

### SOLUTION TO PROBLEM

A thyristor starter according to this invention as defined in claim 1 is a thyristor starter for starting a synchronous machine, including a converter converting first AC power to DC power, an inverter converting the DC power to second AC power at a variable frequency and supplying the second AC power to the synchronous machine, a speed operation portion finding a rotation speed of the synchronous machine, a control angle operation portion including a function or a table showing relation between the rotation speed of the synchronous machine and a phase control angle of the inverter and finding a phase control angle having a value in accordance with the rotation speed of the synchronous machine found by the speed operation portion, and a control unit controlling the inverter based on the phase control angle found by the control angle operation portion. Here, the control angle operation portion varies the phase control angle from a minimum value to a maximum value in accordance with the rotation speed of the synchronous machine, and the control angle operation portion varies a rate of increase in phase control angle relative to the rotation speed of the synchronous machine in a plurality of steps in accordance with the rotation speed of the synchronous machine such that a DC voltage which appears at an input terminal of the inverter is constant in spite of variation in rotation speed of the synchronous machine.

Further preferably, the rate of increase in phase control angle relative to the rotation speed of the synchronous machine decreases in a plurality of steps in accordance with the rotation speed of the synchronous machine.

Further preferably, a voltage detector detecting a three-phase AC voltage output from the synchronous machine is included, and the speed operation portion finds a rotation speed of the synchronous machine based on the three-phase AC voltage detected by the voltage detector.

Further preferably, a position detector detecting a position of a rotor of the synchronous machine is included, and the speed operation portion finds a rotation speed of the synchronous machine based on a result of detection by the position detector.

Further preferably, the synchronous machine is a generator of a thermal power station.

### ADVANTAGEOUS EFFECTS OF INVENTION

In the thyristor starter according to this invention, a phase control angle of the inverter varies from a minimum value to a maximum value in accordance with a rotation speed of the synchronous machine, and a rate of increase in phase control angle relative to the rotation speed of the synchronous machine is varied in a plurality of steps in accordance with the rotation speed of the synchronous machine. Therefore, variation in DC voltage which appears on the side of the input terminal of the inverter can be suppressed to be less, and reduction in size and improvement in efficiency in use of the converter can be achieved.

### BRIEF DESCRIPTION OF DRAWINGS

Fig. 1 is a circuit block diagram showing a configuration of a thyristor starter according to one embodiment of the present invention.
Fig. 2 is a diagram showing relation between a rotation speed of a synchronous machine shown in Fig. 1 and an effective value of a terminal voltage of the synchronous machine.
Fig. 3 is a circuit diagram showing a configuration and an operation of an inverter shown in Fig. 1.
Fig. 4 is a timing chart schematically showing an ideal commutation operation of the inverter shown in Fig. 3.
Fig. 5 is another timing chart schematically showing an ideal commutation operation of the inverter shown in Fig. 3.
Fig. 6 is a diagram showing relation among a rotation speed, a phase control angle, and a DC voltage in an ideal γ constant control scheme.
Fig. 7 is a circuit diagram showing a current which flows in the inverter shown in Fig. 3 during an actual commutation operation.
Fig. 8 is a timing chart schematically showing an actual commutation operation of the inverter shown in Fig. 3.
Fig. 9 is another timing chart schematically showing an actual commutation operation of the inverter shown in Fig. 3.
Fig. 10 is a diagram showing relation among a rotation speed, a phase control angle, and a DC voltage in an actual γ constant control scheme.
Fig. 11 is a timing chart schematically showing an actual commutation operation of the inverter in a γ linear control scheme.
Fig. 12 is a diagram showing relation among a rotation speed, a phase control angle, and a DC voltage in the γ linear control scheme.
Fig. 13 is a diagram showing relation among a rotation speed, a phase control angle, and a DC voltage in a y variable control scheme.

### DESCRIPTION OF EMBODIMENTS

In a thermal power station, a generator implemented by a synchronous machine is coupled to a gas turbine, and the generator is rotationally driven by the gas turbine. A thyristor starter is an apparatus starting the generator and the gas turbine which have been stopped, by rotating the generator which has been stopped to a prescribed rotation speed from which the gas turbine can speed up in a self-sustained manner. The thyristor starter is generally called a load commutated inverter (LCI).

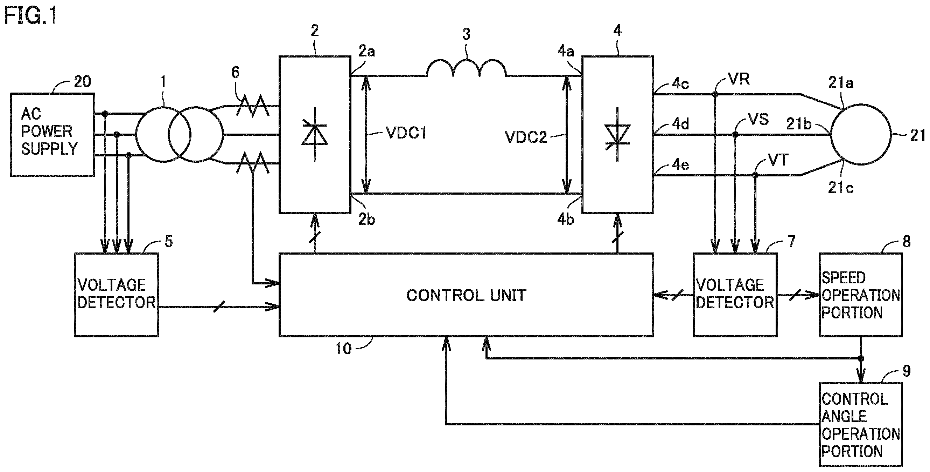

A thyristor starter according to one embodiment of the present invention includes a transformer 1, a converter 2, a DC reactor 3, and an inverter 4, as shown in Fig. 1. Transformer 1 converts a three-phase AC voltage supplied from an AC power supply 20 to a three-phase AC voltage having a prescribed voltage value and provides the three-phase AC voltage to converter 2.

Converter 2 is a three-phase full-wave rectification circuit including at least six thyristors and converts three-phase AC power from transformer 1 to DC power having a variable voltage. DC reactor 3 is connected between a positive output terminal 2a of converter 2 and a positive input terminal 4a of inverter 4 and smoothes a DC current. A negative output terminal 2b of converter 2 and a negative input terminal 4b of inverter 4 are connected to each other. Another DC reactor 3 may be connected between negative output terminal 2b of converter 2 and negative input terminal 4b of inverter 4.

Three output terminals 4c to 4e of inverter 4 are connected to an R-phase terminal 21a, an S-phase terminal 21b, and a T-phase terminal 21c of a synchronous machine 21, respectively. Inverter 4 is a three-phase full-wave rectification circuit including at least six thyristors and converts DC power supplied from converter 2 through DC reactor 3 to three-phase AC power having a variable frequency and a variable voltage, and provides the three-phase AC power to a stator of synchronous machine (generator) 21.

This thyristor starter includes voltage detectors 5 and 7, a current detector 6, a speed operation portion 8, a control angle operation portion 9, and a control unit 10. Voltage detector 5 detects an instantaneous value of a three-phase AC voltage supplied from AC power supply 20 and provides a signal indicating a detection value to control unit 10. Current detector 6 detects a current which flows from transformer 1 to converter 2 and provides a signal indicating a detection value to control unit 10. Voltage detector 7 detects instantaneous values of three-phase AC voltages VR, VS, and VT which appear at respective R-phase terminal 21a, S-phase terminal 21b, and T-phase terminal 21c of synchronous machine 21, and provides signals indicating detection values to control unit 10 and speed operation portion 8. Speed operation portion 8 operates a rotation speed N (rpm) of synchronous machine 21 based on a signal from voltage detector 7 and provides a signal indicating an operation value to control angle operation portion 9 and control unit 10. A position detector detecting a position of a rotor of synchronous machine 21 may be provided instead of voltage detector 7 and a rotation speed N (rpm) of synchronous machine 21 may be operated by speed operation portion 8 based on a result of detection by the position detector.

Control angle operation portion 9 stores a function (or a table) showing relation between rotation speed N of synchronous machine 21 and a phase control angle γ of inverter 4, finds phase control angle γ having a value in accordance with rotation speed N based on the function (or the table) and on a signal indicating rotation speed N provided from speed operation portion 8, and provides a signal indicating phase control angle γ to control unit 10.

According to the thyristor starter in the present application, with increase in rotation speed N, phase control angle γ continuously increases from a minimum value to a maximum value and a rate of change Δγ/ΔN in phase control angle γ varies two or more times. Thus, reduction in size and improvement in efficiency in use of converter 2 can be achieved, which will be described in detail later.

Control unit 10 controls converter 2 based on signals from voltage detector 5, current detector 6, and speed operation portion 8. Control unit 10 controls inverter 4 based on signals from voltage detector 7 (or the position detector above), speed operation portion 8, and control angle operation portion 9.

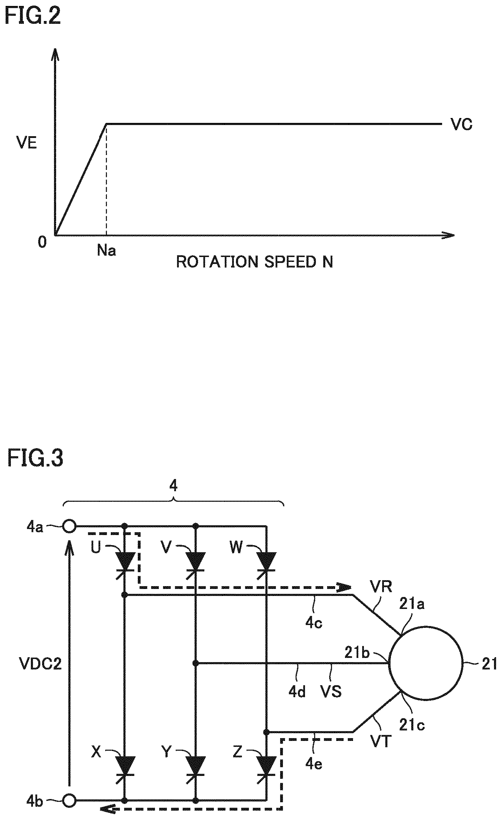

A method of controlling phase control angle γ characterizing this thyristor starter will now be described in detail. At the time of start, as shown in Fig. 2, an effective value VE of a terminal voltage of synchronous machine 21 is maintained, by controlling field, at a constant rated voltage Vc in spite of change in rotation speed N (rpm). While converter 2 is operating, converter 2 always controls an output voltage VDC1 so as to be slightly higher than a DC voltage VDC2 on the side of the input terminal of inverter 4 by voltage lowering due to a resistance component of DC reactor 3. Thus, a DC current which flows through DC reactor 3 is controlled.

During a period until synchronous machine 21 is rotated at a prescribed rotation speed Na from a completely stopped state, phase control angle γ is maintained at a sufficiently small constant value regardless of rotation speed N, and effective value VE of the terminal voltage of synchronous machine 21 increases linearly from 0 V to rated voltage VC.

As synchronous machine 21 is rotationally driven, three-phase AC voltages VR, VS, and VT appear at R-phase terminal 21a, S-phase terminal 21b, and T-phase terminal 21c of synchronous machine 21, respectively. These three-phase AC voltages VR, VS, and VT are converted by inverter 4 to DC voltage VDC2 and appear across input terminals 4a and 4b of inverter 4. Namely, as shown in Fig. 3, inverter 4 includes at least six thyristors U, V, W, X, Y, and Z.

Thyristors U, V, and W have anodes all connected to positive input terminal 4a and cathodes connected to output terminals 4c to 4e, respectively. Thyristors X, Y, and Z have anodes connected to output terminals 4c to 4e, respectively, and cathodes all connected to negative input terminal 4b.

In synchronization with three-phase AC voltages VR, VS, and VT, one thyristor of thyristors U, V, and W and one thyristor of thyristors X, Y, and Z are rendered conducting, so that three-phase AC power can be supplied to synchronous machine 21 and rotation speed N of synchronous machine 21 can be increased.

For example, as shown in Fig. 3, while thyristors U and Z are conducting, voltage VR of R-phase terminal 21a of synchronous machine 21 appears at input terminal 4a of inverter 4 through thyristor U, and voltage VT of T-phase terminal 21c appears at input terminal 4b of inverter 4. Namely, an R-T line voltage VRT=VR-VT of synchronous machine 21 appears across input terminals 4a and 4b as DC voltage VDC2.

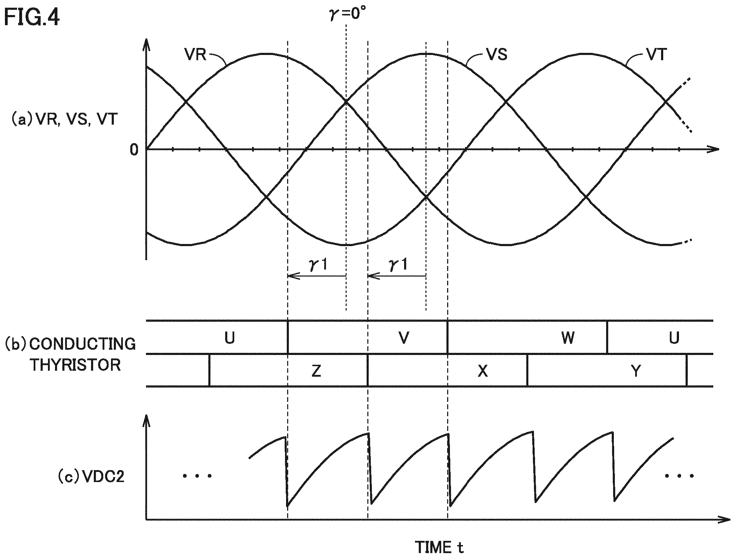

Figs. 4(a) to (c) are timing charts schematically showing an ideal commutation operation of inverter 4. Fig. 4(a) shows three-phase AC voltages VR, VS, and VT, Fig. 4(b) shows conducting thyristors among six thyristors U, V, W, X, Y, and Z of inverter 4, and Fig. 4(c) shows DC voltage VDC2 which appears across input terminals 4a and 4b of inverter 4.

In Figs. 4(a) to (c), a point where line voltages VR-VS, VS-VT, and VT-VR are at 0 V is a reference point of phase control angle γ, and at the reference point, γ = 0 degree. At the time when a phase is advanced from the reference point by a desired angle γ1, an ignition command signal is given to a prescribed thyristor. For example, an ignition command signal is provided to thyristor V while thyristor U is conducting, and then an ignition command signal is provided to thyristor W while thyristor V is conducting. Similarly, an ignition command signal is provided to thyristor X while thyristor Z is conducting, and then an ignition command signal is provided to thyristor Y while thyristor X is conducting.

With transition of conducting thyristors, line voltages VR-VS, VS-VT, and VT-VR of synchronous machine 21 successively appear as DC voltage VDC2 across input terminals 4a and 4b of inverter 4. Control unit 10 controls a path for a current which flows through synchronous machine 21, by igniting two of six thyristors U, V, W, X, Y, and Z in an orderly sequence with rotation of synchronous machine 21, and achieves synchronization with rotation of synchronous machine 21.

In an ideal case where an inductance of synchronous machine 21 is ignorably low, three-phase line voltages VR-VS, VS-VT, and VT-VR of synchronous machine 21 continue to successively appear across input terminals 4a and 4b of inverter 4 as shown in Fig. 4(c) so long as phase control angle γ is maintained at a constant value. A pulsating component of DC voltage VDC2 across input terminals 4a and 4b is smoothed by DC reactor 3 and an average value for DC voltage VDC2 becomes constant.

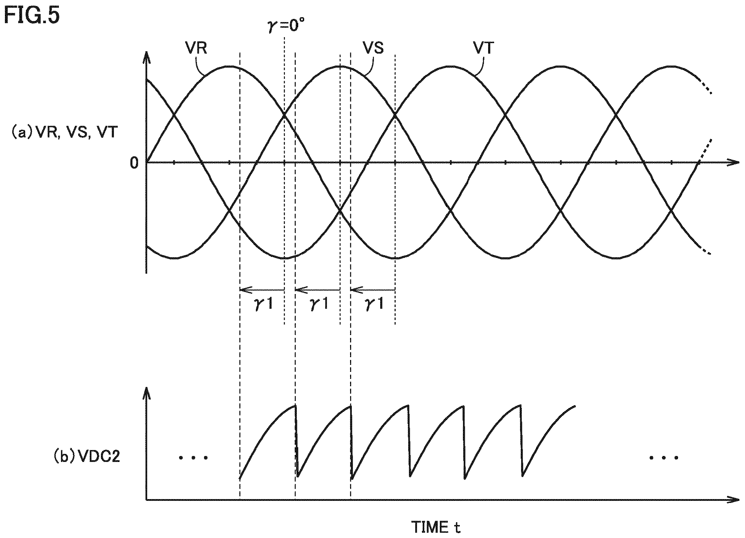

Figs. 5(a) and (b) are timing charts schematically showing an ideal commutation operation of inverter 4 when rotation speed N has increased, which are compared with Figs. 4(a) to (c). Fig. 5(a) shows three-phase AC voltages VR, VS, and VT and Fig. 5(b) shows DC voltage VDC2 which appears across input terminals 4a and 4b of inverter 4. As shown in Figs. 5(a) and (b), even a case that rotation speed N of synchronous machine 21 increases is the same as in Figs. 4(a) to (c), and an average value for DC voltage VDC2 is not varied.

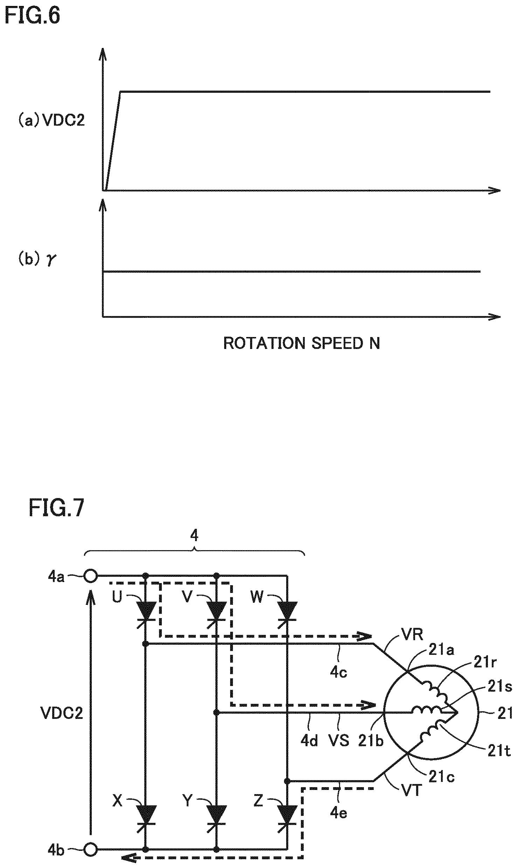

Fig. 6 (a) is a diagram showing relation between rotation speed N and DC voltage VDC2 in an ideal case and Fig. 6(b) is a diagram showing relation between rotation speed N and phase control angle γ in that case. As shown in Figs. 6(a) and (b), in the ideal case, by setting phase control angle γ to a constant value regardless of variation in rotation speed N, DC voltage VDC2 is maintained at a constant value. Here, a method of setting phase control angle γ to a constant value is referred to as a γ constant control scheme.

Actually, however, arc suppression of a conducting thyristor does not instantaneously occur. Owing to an inductance component in synchronous machine 21 or the like, for a finite period, there is a period during which both of a thyristor which has been conducting until just before and a thyristor which will be conducting are rendered conductive. This period is called a commutation overlap period, and an angle corresponding to the commutation overlap period is called a commutation overlap angle u.

Fig. 7 is a circuit diagram showing a current which actually flows in inverter 4 shown in Fig. 3. In Fig. 7, synchronous machine 21 includes three-phase inductances 21r, 21s, and 21t. For example, even when an ignition command signal is provided to thyristor V while thyristor U is conducting, both thyristors U and V continue to conduct during the commutation overlap period under the influence from inductances 21r and 21s. Therefore, DC voltage VDC2 across input terminals 4a and 4g of inverter 4 is set to a voltage obtained by subtracting T-phase voltage VT from an average value (VR+VS)/2 of R-phase voltage VR and S-phase VS. Namely, VDC2 = -VT+(VR+VS)/2.

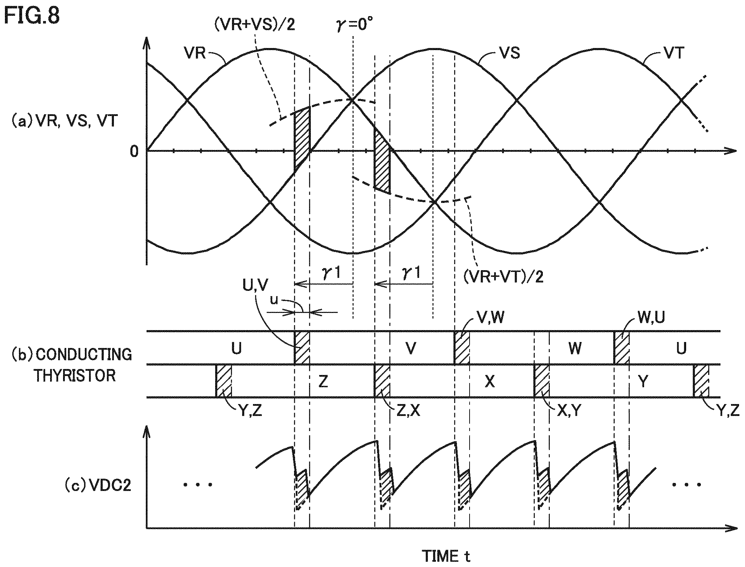

Figs. 8(a) to (c) are timing charts schematically showing an actual commutation operation of inverter 4, which are compared with Figs. 4(a) to (c). Fig. 8(a) shows three-phase AC voltages VR, VS, and VT, Fig. 8(b) shows conducting thyristors among six thyristors U, V, W, X, Y, and Z of inverter 4, and Fig. 8(c) shows DC voltage VDC2 which appears across input terminals 4a and 4b of inverter 4. As shown in Figs. 8(a) to (c), taking into account commutation overlap angle u, during the commutation overlap period, DC voltage VDC2 is higher by an amount comparable to a hatched portion in the drawings than during a period in the ideal commutation operation.

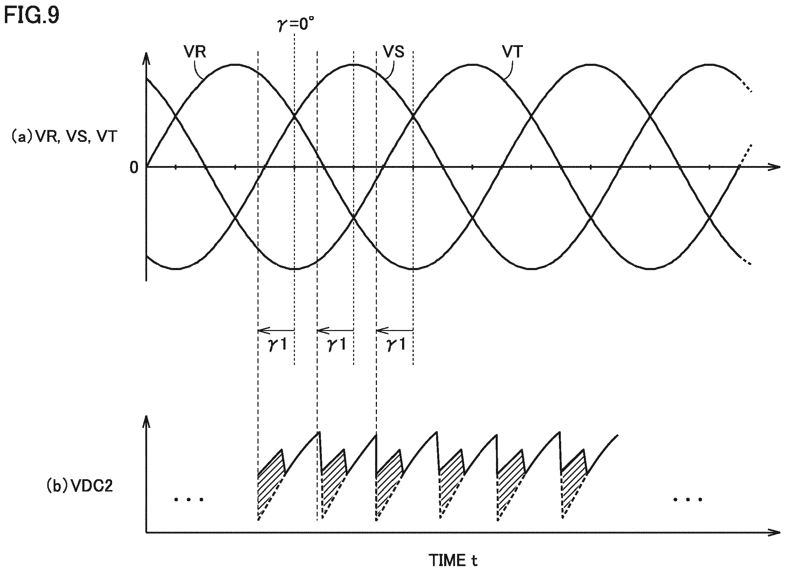

Figs. 9 (a) and (b) are timing charts schematically showing an actual commutation operation of inverter 4 in a case where rotation speed N has increased, which are compared with Figs. 8(a) to (c). Fig. 9(a) shows three-phase AC voltages VR, VS, and VT and Fig. 9(b) shows DC voltage VDC2 which appears across input terminals 4a and 4b of inverter 4. As shown in Figs. 9(a) and (b), with increase in rotation speed N, a ratio of increase in DC voltage VDC2 during commutation is higher.

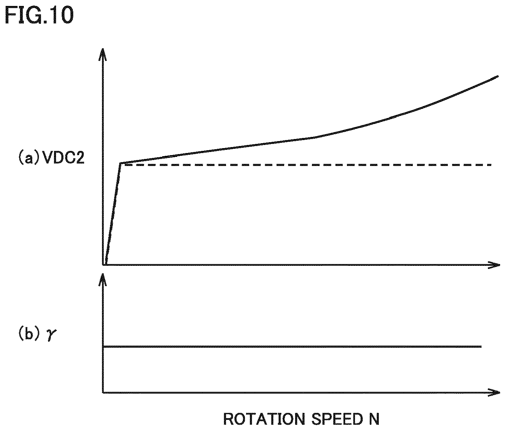

Figs. 10(a) and (b) are diagrams showing actual relation among rotation speed N, phase control angle γ, and DC voltage VDC2 in the y constant control scheme, and in particular, Fig. 10(a) shows relation between rotation speed N and DC voltage VDC2 and Fig. 10(b) shows relation between rotation speed N and phase control angle γ. As shown in Figs. 10(a) and (b), when phase control angle γ is actually maintained constant, due to the influence by increase in commutation overlap period, DC voltage VDC2 gradually increases with increase in rotation speed N. Since DC voltage VDC1 higher than DC voltage VDC2 should be supplied from converter 2, large converter 2 is required.

In order to address this, a method of linearly increasing phase control angle γ at a constant rate of increase Δγ/ΔN from a minimum value to a maximum value with increase in rotation speed N is possible, which is referred to as a γ linear control scheme here.

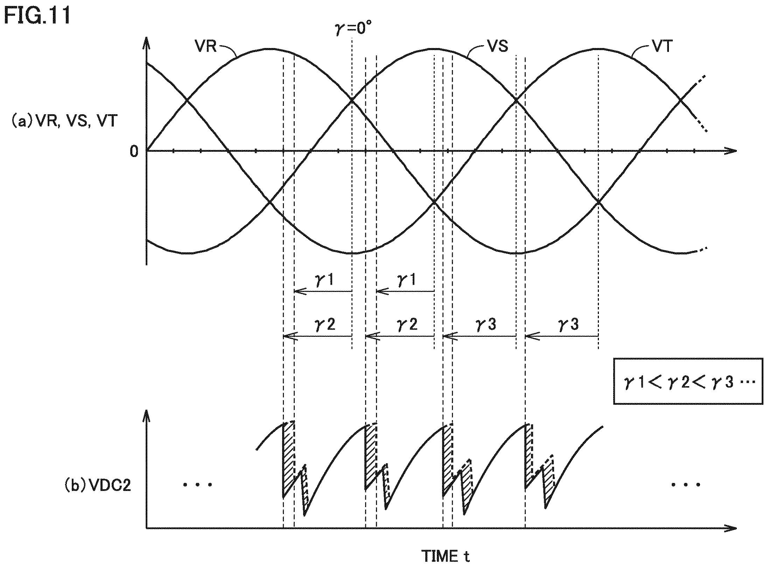

Figs. 11(a) and (b) are timing charts schematically showing an actual commutation operation of inverter 4 in a case where phase control angle γ is increased, which are compared with Figs. 8(a) to (c). Fig. 11(a) shows three-phase AC voltages VR, VS, and VT and Fig. 11(b) shows DC voltage VDC2 which appears across input terminals 4a and 4b of inverter 4. As shown in Figs. 11(a) and (b), even when phase control angle γ is increased to γ1, γ2, γ3, ... (here, γ1<γ2<γ3), DC voltage VDC2 increases owing to commutation overlap angle u. When phase control angle γ is increased, however, as compared with a case where phase control angle γ is not increased, DC voltage VDC2 is lowered by an amount of a hatched portion. Therefore, with the γ linear control scheme, increase in DC voltage VDC2 with increase in rotation speed N can be corrected.

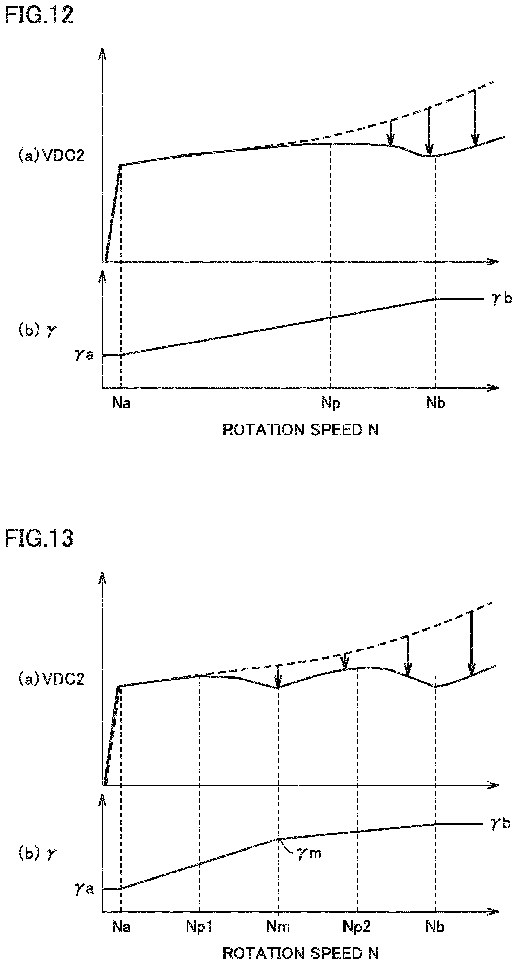

Fig. 12(a) is a diagram showing relation between rotation speed N and DC voltage VDC2 in the γ linear control scheme and Fig. 12(b) is a diagram showing relation between rotation speed N and phase control angle γ in that scheme. In Figs. 12(a) and (b), in the γ linear control scheme, when rotation speed N is between 0 and Na, phase control angle γ is maintained at a minimum value γa.

Though description has also been given with reference to Fig. 2, until synchronous machine 21 is rotated at prescribed rotation speed Na from the completely stopped state, inverter 4 is controlled based on a signal output from voltage detector 7 or a rotor position signal output from a rotor position detector (not shown) provided in synchronous machine 21. During this period, phase control angle γ is maintained at sufficiently small constant value ya regardless of rotation speed N. While rotation speed N is between Na and Nb, phase control angle γ linearly increases from minimum value ya to a maximum value yb in accordance with rotation speed N. When rotation speed N exceeds Nb, phase control angle γ is maintained at maximum value yb. When rotation speed N reaches Nb, start of synchronous machine 21 by a thyristor starter ends and synchronous machine 21 is rotationally driven by a gas turbine.

While rotation speed N is between 0 and Na, DC voltage VDC2 linearly increases. While rotation speed N is between Na and Nb, DC voltage VDC2 has a peak value at a certain rotation speed Np. When rotation speed N exceeds Nb, DC voltage VDC2 increases in accordance with rotation speed N.

As shown in Figs. 12(a) and (b), in the y linear control scheme, DC voltage VDC2 cannot evenly be lowered over the entire region of rotation speed N. DC voltage VDC2 non-linearly varies and has a peak value at certain rotation speed Np. Therefore, converter 2 having such a capacity as allowing output of DC voltage VDC1 even at the time when DC voltage VDC2 attains to a peak value should be provided. At rotation speed N other than rotation speed Np at which DC voltage VDC2 attains to a peak value, such a converter 2 should operate with DC voltage VDC1 being lowered, and efficiency in use of converter 2 lowers.

Then, according to the invention of the subject application, rate of increase Δγ/ΔN in phase control angle γ is varied two or more times in accordance with rotation speed N such that DC voltage VDC2 is close to a constant value. Here, this method is referred to as a y variable control scheme. In Figs. 13(a) and (b), rate of increase Δγ/ΔN in y is varied in two steps. Namely, while rotation speed N is between 0 and Na, phase control angle γ is maintained at minimum value ya. While rotation speed N is between Na and Nm, phase control angle γ linearly increases at a prescribed rate of increase Δγ/ΔN=A1 from minimum value ya to a prescribed value γm in accordance with rotation speed N. While rotation speed N is between Nm and Nb, phase control angle γ linearly increases at a prescribed rate of increase Δγ/ΔN=A2 from prescribed value ym to maximum value yb in accordance with rotation speed N. When rotation speed N exceeds Nb, phase control angle γ is maintained at maximum value yb. Here, relation of Na<Nm<Nb, γa<γm<γb, and A1>A2 are satisfied.

While rotation speed N is between 0 and Na, DC voltage VDC2 linearly increases. While rotation speed N is between Na and Nm, DC voltage VDC2 has a peak value at a certain rotation speed Np1. While rotation speed N is between Nm and Nb, DC voltage VDC2 has a peak value at a certain rotation speed Np2. When rotation speed N exceeds Nb, DC voltage VDC2 increases in accordance with rotation speed N.

Based on comparison between the y linear control scheme in Figs. 12(a) and (b) and the y variable control scheme in Figs. 13(a) and (b), it can be seen that the y variable control scheme can lower DC voltage VDC2 over the entire region of rotation speed N and DC voltage VDC2 can be close to a constant value. Thus, by increasing the number of times of change in rate of increase Δγ/ΔN in phase control angle γ in accordance with rotation speed N to three, four, and five, DC voltage VDC2 can be close to a constant value.

Since rate of increase Δγ/ΔN in phase control angle γ is varied a plurality of times in accordance with rotation speed N in this embodiment, DC voltage VDC2 can be close to a constant value. Therefore, reduction in size and improvement in efficiency in use of converter 2 can be achieved.

Though a case that synchronous machine 21 is a generator rotationally driven by a gas turbine in a thermal power station has been described in this embodiment, the embodiment is not limited thereto and synchronous machine 21 may be a synchronous machine used in a general industrial field. For example, synchronous machine 21 may be a synchronous machine for a cooling blower in ironworks.

### REFERENCE SIGNS LIST

1 transformer; 2 converter; 3 DC reactor; 4 inverter; 5, 7 voltage detector; 6 current detector; 8 speed operation portion; 9 control angle operation portion; 10 control unit; 20 AC power supply; and 21 synchronous machine.

## Claims

1. A thyristor starter for starting a synchronous machine (21), comprising:
a converter (2) converting first AC power to DC power;
an inverter (4) converting said DC power to second AC power at a variable frequency and supplying the second AC power to said synchronous machine (21);
a speed operation portion (8) finding a rotation speed of said synchronous machine (21);
a control angle operation portion (9) including a function or a table showing relation between the rotation speed of said synchronous machine (21) and a phase control angle of said inverter (4) and finding a phase control angle having a value in accordance with the rotation speed of said synchronous machine (21) found by said speed operation portion (8); and
a control unit (10) controlling said inverter (4) based on the phase control angle found by said control angle operation portion (9), wherein
the control angle operation portion (9) is adapted to vary said phase control angle from a minimum value to a maximum value in accordance with the rotation speed of said synchronous machine (21), **characterised in that**
the control angle operation portion (9) is adapted to vary a rate of increase in said phase control angle relative to the rotation speed of said synchronous machine (21) in a plurality of steps in accordance with the rotation speed of said synchronous machine such that a DC voltage which appears at an input terminal of said inverter (4) is constant in spite of variation in rotation speed of said synchronous machine (21).

2. The thyristor starter according to claim 1, wherein
the rate of increase in said phase control angle relative to the rotation speed of said synchronous machine (21) decreases in a plurality of steps in accordance with the rotation speed of said synchronous machine (21).

3. The thyristor starter according to claim 1, comprising a voltage detector (7) detecting a three-phase AC voltage output from said synchronous machine (21), wherein
said speed operation portion (8) is adapted to find a rotation speed of said synchronous machine (21) based on the three-phase AC voltage detected by said voltage detector (7).

4. The thyristor starter according to claim 1, comprising a position detector detecting a position of a rotor of said synchronous machine (21), wherein
said speed operation portion (8) is adapted to find a rotation speed of said synchronous machine (21) based on a result of detection by said position detector.

5. The thyristor starter according to claim 1, wherein
said synchronous machine (21) is a generator of a thermal power station.

## Patentansprüche

1. Thyristorstarter zum Starten einer Synchronmaschine (21), umfassend:
einen Wandler (2), der erste Wechselstromleistung in Gleichstromleistung umwandelt;
einen Wechselrichter (4), der die Gleichstromleistung bei einer variablen Frequenz in zweite Wechselstromleistung umwandelt und die zweite Wechselstromleistung der Synchronmaschine (21) zuführt;
einen Geschwindigkeitsbetriebsabschnitt (8), der eine Drehgeschwindigkeit der Synchronmaschine (21) findet;
einen Steuerwinkelbetriebsabschnitt (9), der eine Funktion oder eine Tabelle beinhaltet, welche die Beziehung zwischen der Drehgeschwindigkeit der Synchronmaschine (21) und einem Phasensteuerwinkel des Wechselrichters (4) zeigt und einen Phasensteuerwinkel findet, der einen Wert gemäß der Drehgeschwindigkeit der Synchronmaschine (21) aufweist, die durch den Geschwindigkeitsbetriebsabschnitt (8) gefunden wird; und
eine Steuereinheit (10), die den Wechselrichter (4) basierend auf dem Phasensteuerwinkel steuert, der durch den Steuerwinkelbetriebsabschnitt (9) gefunden wird, wobei der Steuerwinkelbetriebsabschnitt (9) ausgelegt ist, um den Phasensteuerwinkel von einem Mindestwert zu einem Höchstwert gemäß der Drehgeschwindigkeit der Synchronmaschine (21) zu variieren,
**dadurch gekennzeichnet, dass**
der Steuerwinkelbetriebsabschnitt (9) ausgelegt ist, um eine Anstiegsrate des Phasensteuerwinkels relativ zu der Drehgeschwindigkeit der Synchronmaschine (21) in einer Vielzahl von Schritten gemäß der Drehgeschwindigkeit der Synchronmaschine zu variieren, sodass eine Gleichstromspannung, die an einem Eingangsanschluss des Wechselrichters (4) auftritt, trotz Variation der Drehgeschwindigkeit der Synchronmaschine (21) konstant ist.

2. Thyristorstarter nach Anspruch 1, wobei
die Anstiegsrate des Phasensteuerwinkels relativ zu der Drehgeschwindigkeit der Synchronmaschine (21) in einer Vielzahl von Schritten gemäß der Drehgeschwindigkeit der Synchronmaschine (21) abnimmt.

3. Thyristorstarter nach Anspruch 1, umfassend einen Spannungsdetektor (7), der einen dreiphasigen Wechselstromspannungsausgang von der Synchronmaschine (21) erfasst, wobei der Geschwindigkeitsbetriebsabschnitt (8) ausgelegt ist, um eine Drehgeschwindigkeit der Synchronmaschine (21) basierend auf der dreiphasigen Wechselstromspannung zu finden, die durch den Spannungsdetektor (7) erfasst wird.

4. Thyristorstarter nach Anspruch 1, umfassend einen Positionsdetektor, der eine Position eines Rotors der Synchronmaschine (21) erfasst, wobei der Geschwindigkeitsbetriebsabschnitt (8) ausgelegt ist, um eine Drehgeschwindigkeit der Synchronmaschine (21) basierend auf einem Erfassungsergebnis durch den Positionsdetektor zu finden.

5. Thyristorstarter nach Anspruch 1, wobei
die Synchronmaschine (21) ein Generator eines Wärmekraftwerks ist.

## Revendications

1. Démarreur à thyristor destiné à démarrer une machine synchrone (21), comprenant :
un convertisseur (2) convertissant une première puissance à courant alternatif (CA) en une puissance à courant continu (CC) ;
un onduleur (4) convertissant ladite puissance CC en une seconde puissance CA à une fréquence variable et fournissant la seconde puissance CA à ladite machine synchrone (21) ;
une partie d'opération de vitesse (8) donnant une vitesse de rotation de ladite machine synchrone (21) ;
une partie d'opération d'angle de commande (9) comprenant une fonction ou un tableau montrant la relation entre la vitesse de rotation de ladite machine synchrone (21) et un angle de commande de phase dudit onduleur (4) et donnant un angle de commande de phase possédant une valeur selon la vitesse de rotation de ladite machine synchrone (21) donnée par ladite partie d'opération de vitesse (8) ; et
une unité de commande (10) commandant ledit onduleur (4) sur la base de l'angle de commande de phase donné par ladite partie d'opération d'angle de commande (9),
ladite partie d'opération d'angle de commande (9) étant adaptée pour faire varier ledit angle de commande de phase à partir d'une valeur minimale jusqu'à une valeur maximale selon la vitesse de rotation de ladite machine synchrone (21), **caractérisé en ce que** la partie d'opération d'angle de commande (9) est adaptée pour faire varier un taux d'augmentation dudit angle de commande de phase par rapport à la vitesse de rotation de ladite machine synchrone (21) en une pluralité d'étapes selon la vitesse de rotation de ladite machine synchrone de sorte qu'une tension CC qui apparaît au niveau d'une borne d'entrée dudit onduleur (4) soit constante malgré la variation de la vitesse de rotation de ladite machine synchrone (21).

2. Démarreur à thyristor selon la revendication 1, ladite vitesse d'augmentation dudit angle de commande de phase par rapport à la vitesse de rotation de ladite machine synchrone (21) diminuant en une pluralité d'étapes selon la vitesse de rotation de ladite machine synchrone (21).

3. Démarreur à thyristor selon la revendication 1, comprenant un détecteur de tension (7) détectant une tension CA triphasée délivrée en sortie par ladite machine synchrone (21), ladite partie d'opération de vitesse (8) étant adaptée pour donner une vitesse de rotation de ladite machine synchrone (21) sur la base de la tension CA triphasée détectée par ledit détecteur de tension (7).

4. Démarreur à thyristor selon la revendication 1, comprenant un détecteur de position détectant une position d'un rotor de ladite machine synchrone (21), ladite partie d'opération de vitesse (8) étant adaptée pour donner une vitesse de rotation de ladite machine synchrone (21) sur la base d'un résultat de détection par ledit détecteur de position.

5. Démarreur à thyristor selon la revendication 1, ladite machine synchrone (21) étant un générateur d'une centrale thermique.
